# EUROPEAN PATENT APPLICATION

(11) **EP 0 709 180 A2**
(43) Date of publication of application: **01.05.1996**
(21) Application number: 95115658.7
(22) Date of filing: 04.10.1995
(51) Int. Cl.: B29D 30/24, B29D 30/26

(54) **Tire material winding drum**

(30) Priority: 24.10.1994 JP 258236/94
(71) Applicant: MITSUBISHI JUKOGYO KABUSHIKI KAISHA, Tokyo 100 (JP)
(72) Inventor: Miyamoto, Yoshinori, Nagasaki Shipyard Mach. Works, Nagasaki-shi, Nagasaki-ken (JP); Sato, Hidemasa, Nagasaki Shipyard Mach. Works, Nagasaki-shi, Nagasaki-ken (JP); Agawa, Jiro, Nagasaki Shipyard Mach. Works, Nagasaki-shi, Nagasaki-ken (JP); Aikawa, Katsuhide, Nagasaki Shipyard Mach. Works, Nagasaki-shi, Nagasaki-ken (JP)
(74) Representative: Henkel, Feiler, Hänzel & Partner

(57) **Abstract**

Object: ① To omit such structures as an air introducing pipe to inject a compressed air into a cylinder chamber, rotary seals, etc. and simplify maintenance services, ② to enhance accuracy of winding and ③ to enhance productivity.

Construction: A rod (8) to reciprocate a sleeve (7) in the direction of drum axis and a driving unit (servomotor) (15) to reciprocate said rod (8) are connected rotatably and slidably via a bearing (9). And yet, as said driving unit (15) is provided outside of the drum, such structures as an air introducing pipe to inject a compressed air into a cylinder chamber, rotary seals, etc. are omitted and maintenance services can be simplified. Further, even if the materials wound around the drum loosen, the drum diameter is slightly adjusted and the position of the materials is fixed, a material loosening in an automatic winding is dissolved and accuracy of winding is enhanced. Furthermore, a step change is facilitated, a time of step change is shortened and productivity is enhanced.

## Description

### BACKGROUND OF THE INVENTION:

### Field of the Invention:

The present invention relates to a tire material winding drum used in a tire molding machine.

### Description of the Prior Art:

A tire material winding drum is used for winding materials composing a tire, such as a ply, a side wall, an inner liner, etc. for making a tire assembly. Said tire assembly made on a winding drum by such tire component materials is taken out of the winding drum by a transferring device and transferred to a shaping drum, etc.

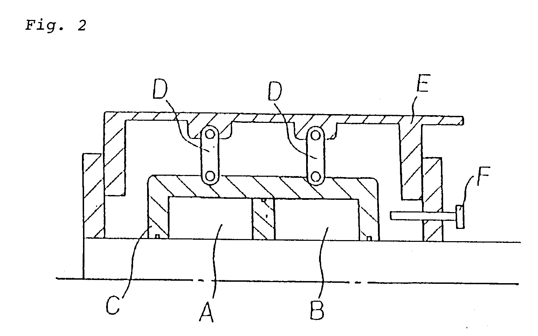

Consequently, the tire material winding drum must be enlargeable or reducible of its outer diameter and an example of a heretofore known enlarging or reducing mechanism is shown in Fig. 2. In this enlarging or reducing mechanism, a compressed air is injected into cylinder chambers A, B, then a cylinder C moves, a link D fitted to the cylinder C moves and a segment E fitted to the link D displaces in the direction of radius. And with a stopper F being adjusted, the outer diameter of the drum after changed is set for use.

In a heretofore known tire material winding drum as shown in Fig. 2, however, there are following shortcomings, that is:
(1) As a driving source of the cylinder C, etc. is provided within the drum which is a rotating element, such structures as an air introducing pipe, rotary seals, etc. are necessary, and maintenance services therefor becomes complicated.
(2) As a control to obtain a given outer diameter during a work of tire molding cannot be done, if a side wall, for example, is wound and joined in an automatic winding process and then an inner liner is going to be wound, such wound side wall material loosens because of a low tension and the position of the wound side wall deviates so that the inner liner cannot be wound.

### SUMMARY OF THE INVENTION:

In view of the above described shortcomings in the prior art, it is an object of the present invention to provide a tire material winding drum in which ① such structures as an air introducing pipe to inject a compressed air into a cylinder chamber, rotary seals, etc. can be omitted and maintenance services therefor can be simplified, ② accuracy of winding can be enhanced and ③ productivity can be enhanced.

For a purpose of attaining the above described object, the present invention discloses a tire material winding drum in which a sleeve disposed about the outer side of a shaft makes reciprocating movements in the direction of drum axis and the outer diameter of segments disposed about the outer side of said sleeve is thereby enlarged or reduced, wherein a rod to reciprocate said sleeve in the direction of drum axis and a driving unit to reciprocate said rod are connected rotatably and slidably via a bearing (Claim 1).

In a tire material winding drum according to the present invention, a servomotor can be used in said driving unit (Claim 2).

In a tire material winding drum according to the present invention, a rod to reciprocate a sleeve in the direction of drum axis and a driving unit to reciprocate said rod are connected rotatably and slidably via a bearing as mentioned above, and yet, as said driving unit is provided outside of the drum, such structures as an air introducing pipe to inject a compressed air into a cylinder chamber, rotary seals, etc. can be omitted and maintenance services therefor can be simplified. And even if the materials wound around the drum loosen, the drum diameter is slightly adjusted and the position of the materials is fixed, thus a material loosening is dissolved and accuracy of winding is enhanced. Further, a step change is facilitated, a time of step change is shortened and productivity is enhanced.

### BRIEF DESCRIPTION OF THE DRAWINGS:

In the accompanying drawings:

Fig. 1 is a longitudinal sectional view showing a tire material winding drum of a preferred embodiment according to the present invention.

Fig. 2 is a longitudinal sectional view showing a tire material winding drum in the prior art.

### DESCRIPTION OF THE PREFERRED EMBODIMENTS:

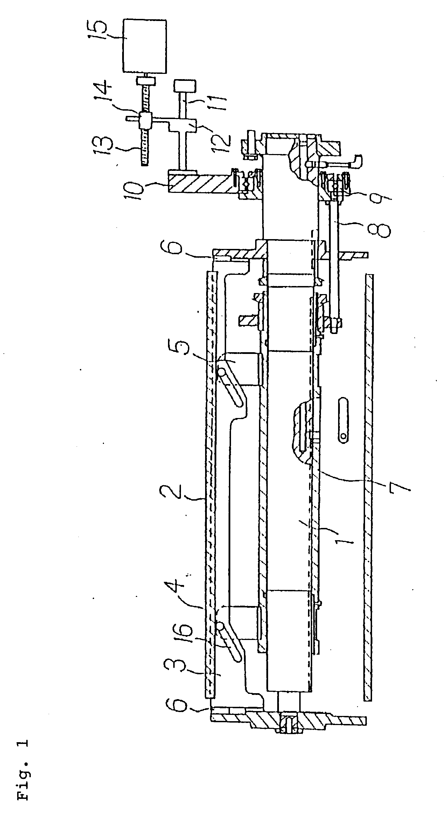

A tire material winding drum of a preferred embodiment according to the present invention is described in reference to Fig. 1. Said winding drum comprises a shaft 1, a sleeve 7 disposed about the outer side of said shaft slidably in the direction of axis, a bracket 5 jointly movable with said sleeve 7, a cam follower 4 fitted to said bracket 5, a rib 3 connected via a linear motion guide 6 and a segment 2 fitted to the rib 3.

The sleeve 7 is connected to a servomotor 15 via a rod 8, a bearing 9, a bracket 10, a rod 11, a bracket 12, a nut 14 and a thread bar 13.

In said tire material winding drum, upon the servomotor being driven, the sleeve 7 makes reciprocating movements in the direction of axis, the bracket 5 and the cam follower 4 move together, the rib 3 moves along an inclined groove 16 provided on the rib 3, the segment 2 moves in the direction of radius, and the outer diameter of the drum is changed. At this time, by the servomotor 15 making position controls, the outer diameter of the drum can be enlarged or reduced to a given position.

In a tire material winding drum according to the present invention as mentioned above, a rod to reciprocate a sleeve in the direction of drum axis and a driving unit to reciprocate said rod are connected rotatably and slidably via a bearing. And yet, as said driving unit is provided outside of the drum, such structures as an air introducing pipe to inject a compressed air into a cylinder chamber, rotary seals, etc. can be omitted and maintenance services therefor can be simplified.

Further, even if the materials wound around the drum loosen, the drum diameter is slightly adjusted and the position of the materials can be fixed, thus a material loosening in an automatic winding can be dissolved and accuracy of winding can be enhanced.

Furthermore, a step change can be facilitated, a time of step change can be shortened and productivity can be enhanced.

While the preferred form of the present invention has been described, variations thereto will occur to those skilled in the art within the scope of the present inventive concepts which are delineated by the following claims.

## Claims

1. A tire material winding drum in which a sleeve disposed about the outer side of a shaft makes reciprocating movements in the direction of drum axis and the outer diameter of segments disposed about the outer side of said sleeve is thereby enlarged or reduced, characterized in that a rod (8) to reciprocate said sleeve (7) in the direction of drum axis and a driving unit (15) to reciprocate said rod (8) are connected rotatably and slidably via a bearing (9).

2. A tire material winding drum set out in Claim 1, characterized in that a servomotor is used in said driving unit (15).
